# DEMANDE DE BREVET EUROPEEN

(11) **EP 2 515 546 A1**
(43) Date de publication de la demande: **24.10.2012**
(21) Numéro de dépôt: 12163008.1
(22) Date de dépôt: 03.04.2012
(51) Int. Cl.: H04N 13/04, H04N 13/02

(54) **Procédé et dispositif de création d'images stéréoscopiques**

(30) Priorité: 22.04.2011 FR 1153515
(71) Demandeur: FRANCE TELECOM, 75015 Paris (FR)
(72) Inventeur: Chedaleux, Cédric, 35000 RENNES (FR); Roul, Guillaume, 35530 NOYAL SUR VILAINE (FR)

(57) **Abrégé**

L'invention a trait à un procédé de création d'images stéréoscopiques. à partir d'une description (IHM) d'une image bidimensionnelle (IHM2d) comportant au moins un composant d'interface graphique (2,3,4). Le procédé est caractérisé en ce que au moins un composant (2,3,4) de l'image bidimensionnelle (IHM2d) est transformé de telle sorte que les images stéréoscopiques créées (IHMd, IHMg) sont différentes de ladite image bidimensionnelle (IHM2d).

## Description

L'invention se rapporte à la création d'images stéréoscopiques, notamment des images stéréoscopiques d'Interfaces Homme-Machine (IHM), destinées à être affichées sur un écran tridimensionnel (3D).

Plus particulièrement, l'invention s'applique à tout terminal comportant un module apte à recevoir en entrée la description d'une image d'interface homme-machine bidimensionnelle et à restituer en sortie deux images stéréoscopiques de cette même interface homme-machine. Un tel terminal est par exemple un ordinateur, un téléviseur, un décodeur numérique ou encore un téléphone mobile.

On entend par interface homme-machine un ensemble de composants graphiques affichés dans une ou plusieurs fenêtres virtuelles sur un écran.

Les deux images stéréoscopiques de l'interface homme-machine sont destinées à être restituées en relief sur un écran tridimensionnel.

Les écrans tridimensionnels, notamment les écrans tridimensionnels stéréoscopiques d'ordinateur et de téléviseur, sont utilisés communément pour la visualisation de données en relief. Les écrans tridimensionnels ont généralement la capacité d'afficher des images en mode bidimensionnel ou en mode tridimensionnel. En mode bidimensionnel, une seule image est affichée par l'écran qui la restitue sans relief. En mode tridimensionnel, deux images sont affichées par l'écran qui les restitue alors en relief. Les deux images, dites stéréoscopiques, sont décalées l'une par rapport à l'autre, l'une étant destinée à l'oeil gauche et l'autre à l'oeil droit d'un utilisateur de l'écran. Ce décalage, nommé aussi parallaxe, correspond à la différence de distance horizontale entre les deux yeux de l'utilisateur humain. Selon la valeur de cette parallaxe, le cerveau de l'utilisateur imagine un point de convergence situé devant ou derrière le plan de l'écran, associant ainsi une impression de profondeur à l'objet observé.

D'autres systèmes, notamment les systèmes à vues multiples, aussi désignés sous le nom de systèmes multi-vues, génèrent plus de deux images de la scène correspondant à différentes vues des objets à afficher selon plusieurs directions. Plusieurs images sont alors transmises à un écran qui autorise une visualisation en relief selon plusieurs angles de vues différents. L'utilisateur utilise, selon sa position par rapport à l'écran, deux des images disponibles pour construite une vision stéréoscopique de l'image.

Pour capturer une scène tridimensionnelle, il faut donc au moins deux images, et donc au moins deux dispositifs de capture d'images numériques, caméras ou appareils photographiques, qui capturent chacun ce que voit l'un des deux yeux. Chaque caméra génère ainsi une image d'un couple d'images dites stéréoscopiques, qui vont être agencées pour l'affichage sur un écran tridimensionnel.

Plusieurs formats d'entrée sont possibles pour un tel écran, les deux images stéréoscopiques étant par exemple disposées côte à côte (en anglais : *Side by Side*), ou l'une au-dessus de l'autre (en anglais : *Top*/*Bottom*), ou encore alternativement dans le temps conformément au format Bluray 3D (norme de la *Blu-ray Disc Association* basée sur la norme de codage vidéo multi-vues MPEG-4 / MVC - *Multiview Coding*), pour former une image stéréoscopique globale qui peut être affichée par un écran stéréoscopique acceptant l'un au moins de ces formats.

Naturellement, l'écran tridimensionnel présentant une surface plane, il existe plusieurs technologies permettant de restituer le relief : les écrans dits auto-stéréoscopiques assurent la séparation automatique des deux images ; alternativement, l'utilisateur devra se munir de lunettes polarisées ou tout autre dispositif connu apte à séparer les images destinées à ses yeux gauche et droit.

Il est naturel, sur un tel écran, de souhaiter afficher plusieurs types de données : des images animées (vidéo), des images fixes (photographies), mais aussi des images d'interfaces graphiques. De telles images d'interface graphique, usuellement appelées Interfaces Homme-Machine (IHM), sont des images fixes comprenant un ensemble de composants graphiques (boutons, listes, menus, etc) destinés à un affichage dans une ou plusieurs fenêtres virtuelles dans le but d'interagir avec l'utilisateur.

De telles interfaces homme-machine peuvent être de plusieurs types. Par exemple elles peuvent être de type natif, c'est-à-dire constituées d'un programme qui décrit une seule fenêtre ou page d'affichage, sous la forme d'une suite d'instructions logicielles. Elles peuvent être encore de type web, c'est-à-dire constituées de pages web délivrées via un réseau de type Internet et accessible à l'utilisateur via un navigateur web. Dans ces deux cas, les interfaces reposent sur un ensemble de bibliothèques logicielles graphiques (en anglais : « graphical toolkit ») qui permettent de dessiner les composants graphiques de base, par exemple des fenêtres, des boutons, des listes, etc. Les bibliothèques graphiques peuvent communiquer directement avec le matériel du terminal, notamment la mémoire vidéo, la carte vidéo et le processeur graphique (GPU : Graphical Processor Unit) ou utiliser un pilote graphique (API : Application Program Interface) communiquant avec ce matériel.

Aujourd'hui les interfaces homme-machine classiques sont développées en mode bidimensionnel, c'est-à-dire sans relief, sur la base d'une seule image bidimensionnelle.

Afin de pouvoir les visualiser en relief sur un écran 3D stéréoscopique, une solution simple consiste à créer une seconde image d'interface homme-machine à partir de la première image d'interface homme-machine bidimensionnelle : l'image bidimensionnelle initiale de l'interface homme-machine est créée à partir de sa description, puis elle est dupliquée dans une deuxième image de l'interface homme-machine qui est elle-même modifiée pour donner des effets de relief et de profondeur aux composants graphiques de l'interface homme-machine. Chaque composant graphique de la deuxième image d'interface homme-machine ainsi créée est décalé d'une certaine valeur, qui lui est propre, pour modéliser la vision de cet élément par un oeil (par exemple le droit) tandis que l'image initiale modélise la vision de l'autre oeil (par exemple le gauche). Les deux images de l'interface homme-machine sont ensuite combinées pour obtenir l'effet stéréoscopique escompté. Cette solution nécessite un temps de développement considérable puisqu'elle suppose de concevoir deux interfaces graphiques en décalant chacun des composants graphiques, un par un, et en vérifiant le rendu tridimensionnel obtenu.

De plus, les inventeurs ont constaté que la solution précédente génère des images stéréoscopiques de qualité médiocre puisque l'une des images n'est autre que l'image bidimensionnelle initiale, qui n'a pas été conçue dans le but de faire partie d'un couple stéréoscopique.

L'invention offre une solution ne présentant pas les inconvénients de l'état de la technique.

A cet effet, selon un aspect fonctionnel, l'invention a pour objet un procédé de création d'images stéréoscopiques à partir d'une description d'une image bidimensionnelle comportant au moins un composant d'interface graphique, **caractérisé en ce que** au moins un composant de l'image bidimensionnelle est transformé de telle sorte que les images stéréoscopiques créées sont différentes de ladite image bidimensionnelle.

Ainsi, le procédé de l'invention offre l'avantage de créer un véritable couple d'images stéréoscopiques en vue de leur affichage sur un écran en relief, assurant un meilleur rendu tridimensionnel du composant graphique que si l'une des images en sortie était identique à l'image bidimensionnelle en entrée.

Selon un mode de mise en oeuvre particulier de l'invention, un procédé de création des images stéréoscopiques tel que décrit ci-dessus inclut en outre les étapes de :
- Acquisition d'au moins un composant d'interface graphique bidimensionnel dans la description de l'image bidimensionnelle ;
- Projection dudit au moins un composant graphique acquis dans un univers tridimensionnel;
- Capture des images stéréoscopiques à partir de ladite projection dans l'univers tridimensionnel.

Ce mode de mise en oeuvre de l'invention permet de créer automatiquement les images stéréoscopiques à partir de plusieurs captures, ou photographies, de la scène tridimensionnelle constituée des composants projetés, dont au moins une capture pour l'image de l'interface destinée à l'oeil droit et au moins une autre capture pour l'image de l'interface destinée à l'oeil gauche. Ainsi, selon l'invention, un composant graphique est conçu une seule fois pour l'interface graphique avant d'être projeté une seule fois puis capturé plusieurs fois. Au contraire, la solution de l'art antérieur nécessite de concevoir plusieurs fois ce même composant graphique à partir d'une image d'interface ou d'une description de cette image, l'étape de conception étant suivie de plusieurs projections respectives et de plusieurs captures respectives du composant graphique. Ainsi, grâce à notre invention, le temps de développement de chacun des composants graphiques, et par conséquent de l'interface graphique elle-même, aboutissant aux images stéréoscopiques, est considérablement réduit.

Selon une variante de ce mode de mise en oeuvre, l'étape de projection du procédé tel que décrit ci-dessus comporte une affectation au composant graphique d'un paramètre de profondeur. Cette variante de mise en oeuvre de l'invention permet de déplacer les composants graphiques dans l'univers tridimensionnel afin de leur donner plus ou moins de relief selon leur importance, en les positionnant devant ou derrière l'écran lors de leur rendu.

Selon un aspect matériel, l'invention a pour objet un terminal apte à créer des images stéréoscopiques à partir d'une description d'une image bidimensionnelle comportant au moins un composant d'interface graphique, **caractérisé en ce qu'**il comprend des moyens de transformation d'au moins un composant de l'image bidimensionnelle de telle sorte que les images stéréoscopiques créées sont différentes de ladite image bidimensionnelle.

Selon un mode de mise en oeuvre particulier de l'invention, un terminal tel que décrit ci-dessus inclut en outre :
- Des moyens d'acquisition du au moins un composant graphique acquis dans une description d'une interface graphique bidimensionnelle;
- Des moyens de projection dudit au moins un composant sélectionné dans l'univers tridimensionnel;
- Des moyens de capture des deux images stéréoscopiques à partir de ladite projection dans l'univers tridimensionnel.

Selon une variante de ce mode de mise en oeuvre particulier de l'invention, un terminal tel que décrit ci-dessus inclut en outre des moyens d'affectation au composant graphique d'un paramètre de profondeur.

Selon un autre aspect matériel, l'invention concerne également un programme d'ordinateur apte à être mis en oeuvre sur un terminal tel que décrit ci-dessus, le programme comprenant des instructions de code qui, lorsque le programme est exécuté par un processeur, réalise les étapes du procédé défini ci-dessus.

L'invention sera mieux comprise à la lecture de la description qui suit, donnée à titre d'exemple et faite en référence aux dessins annexés.
La **figure 1** représente un système comportant un module de création de deux images stéréoscopiques selon un mode de réalisation de l'invention.
La **figure 2** est un schéma bloc d'un terminal apte à réaliser les étapes d'un procédé de création des images stéréoscopiques d'interface graphique selon un mode de réalisation de l'invention.
La **figure 3** représente sous forme de schéma bloc des éléments logiciels s'exécutant dans la mémoire d'un terminal selon l'invention.
La **figure 4** représente un organigramme de haut niveau illustrant les différentes étapes d'un procédé selon l'invention.
La **figure 5** représente un organigramme détaillé illustrant les étapes d'initialisation d'un procédé selon l'invention.
Les **figures 6a et 6b** sont des illustrations graphiques des étapes d'initialisation d'un procédé selon l'invention.
La **figure 7** représente un organigramme détaillé illustrant les étapes de projection dans un espace tridimensionnel d'un procédé selon l'invention.
La **figure 8** est une illustration graphique de la projection d'une interface bidimensionnelle dans un espace tridimensionnel selon l'invention.
La **figure 9** représente un organigramme détaillé illustrant les étapes de création d'images stéréoscopiques selon l'invention.

### Description détaillée d'un exemple de réalisation illustrant l'invention

A titre d'illustration, la présente invention sera décrite en référence à un décodeur numérique (STB) connecté à un téléviseur (TV) supportant un écran tridimensionnel stéréoscopique, mais elle peut s'appliquer à d'autres dispositifs tels qu'un téléphone mobile, un ordinateur, un téléviseur, etc.

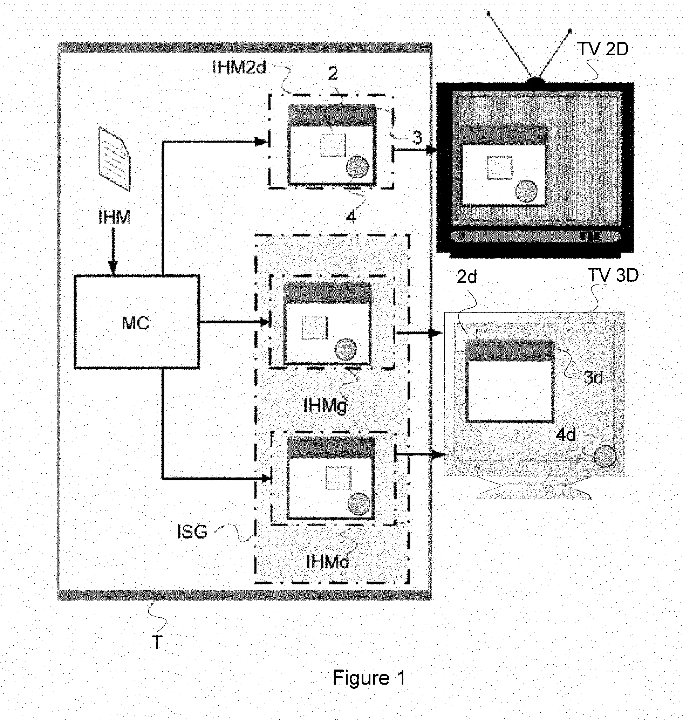

La figure 1 représente un système comportant un terminal T selon l'invention, équipé d'un module de conversion MC, et relié à titre d'exemple à deux écrans, par exemple des téléviseurs TV 2D et TV 3D à affichage respectivement bidimensionnel et tridimensionnel. Le terminal T contient une interface homme-machine IHM. Cette interface peut avoir été développée localement ou à l'extérieur du terminal. Dans notre exemple, on suppose que l'interface graphique a été développée sur un ordinateur à l'extérieur du terminal T et lui a été transmise via un réseau de télécommunications. Le module de conversion MC du terminal T reçoit en entrée une interface homme-machine IHM sous la forme d'une description d'une interface graphique bidimensionnelle IHM2d constituée d'une fenêtre 3 dans laquelle sont dessinés un bouton rectangulaire 2 et un bouton circulaire 4. Cette description peut prendre la forme d'une suite d'instructions de programme aptes à créer, lors de leur exécution, selon l'état de l'art, une image bidimensionnelle IHM2d de l'interface graphique. Le module MC crée deux images stéréoscopiques IHMg et IHMd de l'interface homme-machine. Les deux images IHMg et IHMd sont toutes deux distinctes de l'image bidimensionnelle IHM2d. l'une des images (par exemple IHMg) correspond à la vue de l'oeil gauche et l'autre (IHMd) à celle de l'oeil droit de l'utilisateur. Le module MC peut aussi créer l'image bidimensionnelle IHM2d qui peut être affichée directement sur le téléviseur à affichage bidimensionnel TV2D et peut être également transmise au téléviseur TV 3D pour un affichage en mode bidimensionnel.

L'image stéréoscopique globale ISG formée du couple d'images stéréoscopiques IHMg et IHMd peut en revanche être affichée en relief sur le téléviseur TV 3D équipé d'un écran tridimensionnel, chaque élément de l'interface étant rendu avec une profondeur qui lui est propre : pour un utilisateur de l'écran TV 3D, la fenêtre 3d est affichée avec une profondeur nulle (elle apparaît dans le plan de l'écran, qui est assimilé ici à la surface de projection), le bouton rectangulaire 2d a une profondeur négative (il semble s'enfoncer derrière l'écran) et le bouton circulaire 4d une profondeur positive (il semble sortir de l'écran).

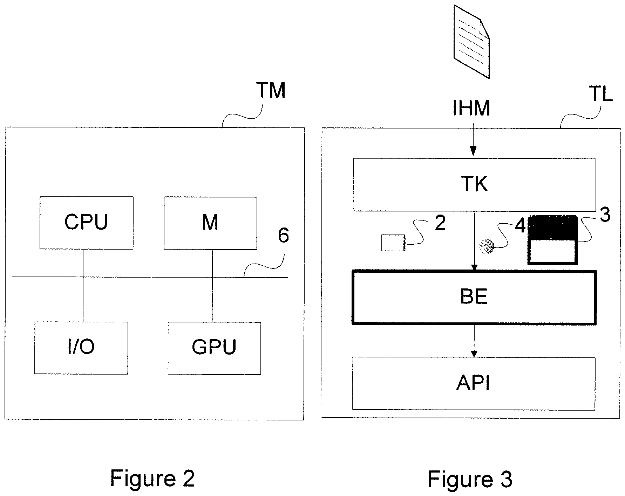

Afin de pouvoir réaliser la création de ces deux images stéréoscopiques d'interface homme-machine, le terminal T doit disposer d'une architecture matérielle et logicielle qui sont maintenant détaillées respectivement à l'appui des figures 2 et 3.

La figure 2 représente de façon très schématique une architecture matérielle TM du terminal T. Le terminal comporte un processeur CPU destiné à exécuter les différentes étapes du procédé. Ce processeur est relié à une mémoire M dans laquelle sont mémorisés au moins les programmes logiciels représentés sur la figure 3 (dans une partie permanente - ROM) de la mémoire et des données d'entrée correspondant à l'interface homme-machine IHM, un processeur graphique GPU destiné à prendre en charge tout ou partie des calculs graphiques autorisant notamment la projection tridimensionnelle des composants graphiques, et des moyens d'entrée-sortie I/O aptes à communiquer avec l'extérieur, notamment pour échanger les données stéréoscopiques avec un écran connecté au terminal, ou avec un réseau de communications. Par exemple ces moyens d'entrée-sortie sont constitués d'une interface HDMI (pour *High Definition Multimedia Interface*) permettant le transfert de données numériques multimédia (audio et vidéo) non compressées en haute définition vers les téléviseurs TV 2D et TV 3D. Tous ces éléments sont reliés entre eux par un système de bus 6.

La figure 3 représente un exemple d'architecture logicielle TL du terminal selon l'invention. Les trois composants TK, BE et API représentés sont enregistrés dans la mémoire M et s'exécutent sur le CPU et le GPU du terminal. L'interface IHM en entrée repose sur un ensemble de bibliothèques logicielles graphiques TK (en anglais : *Graphical Toolkit)* qui permet de développer de telles interfaces homme-machine. II existe de nombreuses bibliothèques graphiques connues, comme par exemple Qt (ensemble de bibliothèques logicielles pour le développement des interfaces graphiques). Elles permettent de dessiner des fenêtres, des boutons, des images et une multitude d'autres composants graphiques.

L'interface IHM peut être une interface Web, c'est-à-dire un ensemble de fenêtres chargées dans un navigateur internet, et repose également dans ce cas sur la bibliothèque TK.

La bibliothèque graphique TK s'appuie elle-même, classiquement, sur une bibliothèque graphique de bas niveau encore appelée pilote graphique ou API (pour *Application Programming Interface*) qui fournit un ensemble de bibliothèques de fonctions dédiées aux traitements de bas niveau, par exemple audio et vidéo (carte vidéo, carte son, etc.) ou relatifs aux périphériques d'entrée-sortie (joystick, carte réseau, souris, etc.). De tels pilotes, comme par exemple OpenGL (*Open Graphics Library -* bibliothèque basée sur une spécification définissant une interface pour la conception d'applications créant des images tridimensionnelles et bidimensionnelles) sont bien connues de l'homme du métier.

La bibliothèque graphique TK, en tant que surcouche du pilote graphique API, offre ainsi une interface de développement de plus haut niveau et donc plus confortable aux développeurs de l'interface homme-machine.

L'invention introduit un module de transformation supplémentaire BE (pour l'anglais *Back-End*) entre la bibliothèque TK et le pilote graphique API. Dans notre exemple de la figure 3, TK fournit au module de transformation BE les images individuelles de tous les composants graphiques de l'interface, c'est-à-dire dans notre exemple le bouton rectangulaire 2, le bouton circulaire 4, et la fenêtre 3.

Le module BE a pour fonction de transformer l'ensemble des composants graphiques en deux représentations complémentaires, au sens stéréoscopique du terme, dans les deux images d'interface graphique IHMd et IHMg.

Dans notre exemple, le module BE utilise le pilote graphique API pour projeter l'interface bidimensionnelle dans un univers tridimensionnel par un procédé de projection qui sera décrit à l'appui des figures suivantes. On entend par univers tridimensionnel un espace tridimensionnel virtuel pour projeter les composants graphiques en vue d'obtenir des objets tridimensionnels constitutifs d'une scène tridimensionnelle (SCENE_3D). Cet univers tridimensionnel comprend des moyens de capture de composant projetés. Ces moyens de capture sont ci-après désignés par l'expression "caméras virtuelles". Une telle caméra virtuelle est un objet logiciel qui définit un point de vue sur la scène tridimensionnelle, et dont la fonction est de capturer cette vue dans l'univers virtuel, simulant ainsi une prise de vue réelle dans un univers réel.

Dans notre exemple, l'ensemble des modules logiciels TL et matériels TM est intégré dans le module MC de conversion du terminal de la figure 1. Le terminal T peut être un décodeur numérique ou un téléphone mobile équipé des éléments cités ci-dessus, ou encore un téléviseur connecté intégrant ces éléments, etc.

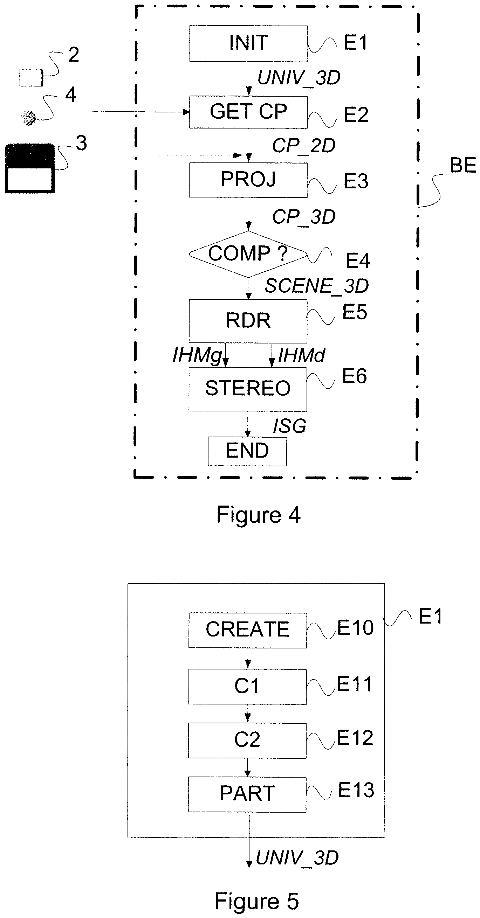

Les différentes étapes du procédé de l'invention exécutées par le module BE vont maintenant être illustrées à l'appui de la figure 4.

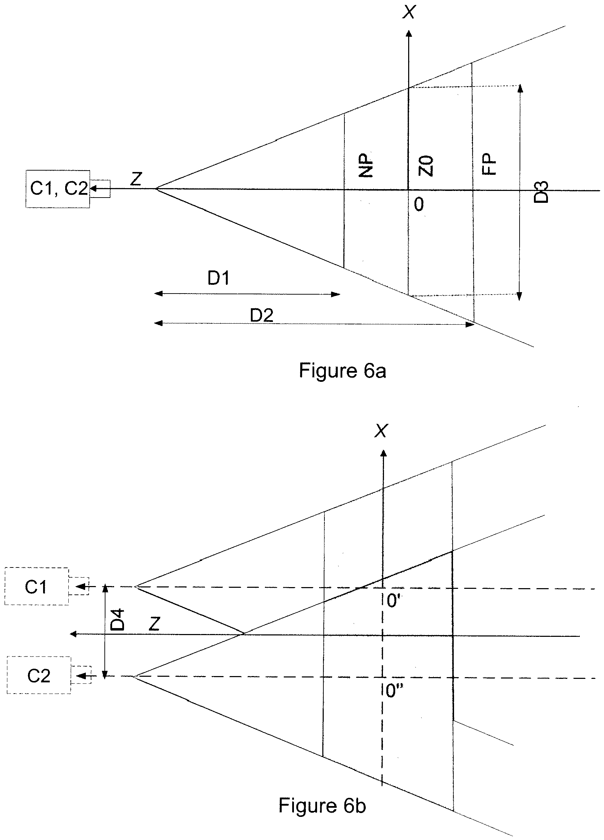

Lors d'une première étape E1 (INIT) d'initialisation, un univers tridimensionnel virtuel (UNIV_3D) est créé par le module BE. Il s'agit de positionner deux caméras virtuelles dans un repère tridimensionnel, de manière à ce que chacune des deux caméras puisse créer l'une des deux images stéréoscopiques de l'interface homme-machine en sortie. Cette étape sera détaillée ultérieurement à l'appui des figures 5 et 6.

L'étape E2 (GET_CP) correspond à l'acquisition par le module BE de l'un des composants graphiques de base constitutifs de l'interface homme-machine (CP_2D). Cet élément est choisi indifféremment parmi tous les composants graphiques disponibles, délivrés par la bibliothèque TK au module BE. Dans notre exemple, on peut par exemple traiter d'abord la fenêtre 3, puis le bouton 2, puis le bouton 4.

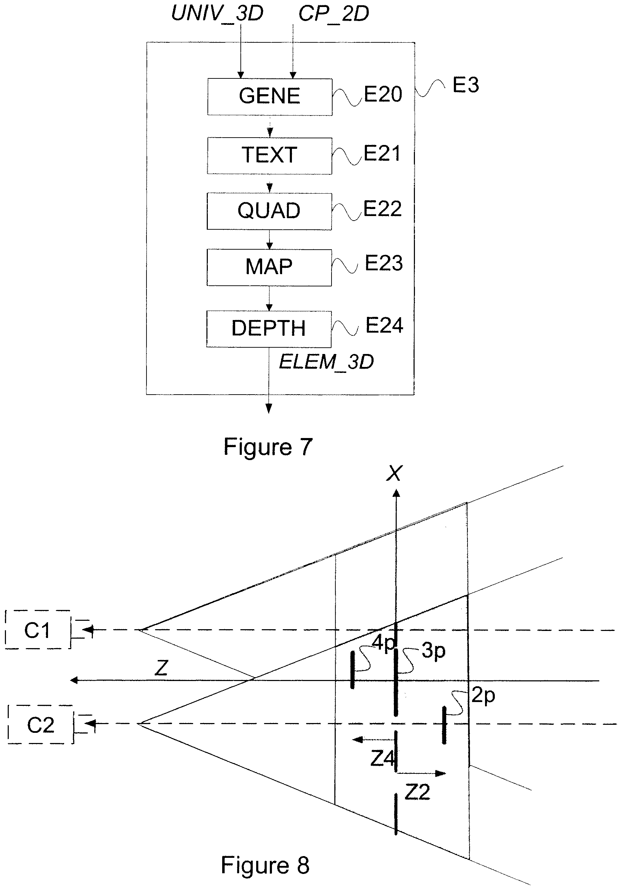

Une fois que l'un des composants graphiques est acquis, le module BE le projette lors d'une étape E3 (PROJ) dans l'univers tridimensionnel créé précédemment. L'étape de projection, qui sera détaillée par la suite à l'appui des figures 7 et 8, consiste à effectuer un plaquage de texture sur un ou plusieurs polygones pour obtenir, à partir de l'élément bidimensionnel, un élément tridimensionnel constitué d'une ou plusieurs facettes possédant la texture de l'élément bidimensionnel.

Lors d'une étape E4 (COMP), le module BE teste s'il reste des composants graphiques à traiter. Si un moins l'un des composants en provenance de la bibliothèque TK n'a pas encore été traité, un nouveau composant est sélectionné et l'étape E3 de projection est effectuée de nouveau. Si tous les composants ont été traités, la scène tridimensionnelle (SCENE_3D), ainsi constituée de tous les composants projetés dans l'univers tridimensionnel, est rendue lors d'une étape E5 (RDR) qui consiste à capturer la scène par les deux caméras qui ont été positionnées à l'étape E1 d'initialisation. A l'issue de cette étape, on dispose de deux images stéréoscopiques IHMd et IHMg correspondant aux deux caméras, qui vont pouvoir être combinées lors d'une étape E6 (STEREO) pour créer l'image globale d'interface homme-machine tridimensionnelle, ISG, à partir des deux images stéréoscopiques, selon le format d'entrée attendu par l'écran tridimensionnel, par exemple côte à côte (en anglais : *Side by Side),* ou l'une au-dessus de l'autre (en anglais : *Top*/*Bottom*)*,* ou encore alternativement dans le temps conformément au mode séquentiel (en anglais : *field sequential*) du format Bluray 3D. Cette étape E6 peut être omise si l'écran tridimensionnel accepte directement les deux images stéréoscopiques en entrée.

Les figures 5, 6a et 6b représentent sous forme d'organigramme et d'illustrations les étapes détaillées de l'initialisation E1 du procédé. Cette initialisation doit aboutir à la création d'un univers tridimensionnel virtuel équipé de deux caméras stéréoscopiques.

La première étape E10 consiste à créer l'espace tridimensionnel représenté par le repère (O,X,Y,Z) sur la figure 6a (l'axe Y, se trouvant perpendiculaire à la figure puisque l'univers virtuel est vu du dessus, n'est pas représenté). Une première caméra virtuelle C1, pointant sur l'origine 0 du repère, est créée à l'étape E11. La configuration de la caméra détermine un volume de l'espace, aussi appelé *frustum* par l'homme du métier, ou qui est potentiellement visible par l'utilisateur lors d'une visualisation à l'écran (surface grisée sur la figure 6a). Il s'agit d'une pyramide tronquée. L'apex de la pyramide est la position de la caméra C1, sa base est le plan le plus éloigné (en anglais : *Far Plane -* FP) et la pyramide est tronquée au niveau du plan le plus proche, en anglais : *Near Plane -* NP). Tous les objets tridimensionnels qui se trouvent dans le frustum sont visibles et seront donc rendus à l'écran. Cet espace est entièrement paramétrable. Par exemple, on pourra prendre des distances D1 = 150 cm (respectivement D2 = 250 cm) entre l'apex de la pyramide et le plan NP (respectivement FP) et une distance D3 de 1280 cm pour la hauteur du plan de référence Z0 qui correspond au plan de projection de profondeur nulle (Z=0). L'unité choisie dans cet exemple est le centimètre mais les distances pourraient être indifféremment exprimées en pouces ou toute autre unité de mesure car l'univers virtuel créé est indépendant d'une unité de mesure et totalement paramétrable.

Une seconde caméra C2 est créée à l'étape E12 de la figure 5, identique à la première caméra C1. Les deux caméras sont confondues et de même frustum.

A l'étape E13, comme représenté sur la figure 6b, les deux caméras C1 et C2 sont écartées l'une de l'autre selon l'axe Y et positionnées à équidistance de la position initiale, en respectant la contrainte de rendu stéréoscopique, c'est-à-dire qu'elles sont écartées d'une distance D4 de parallaxe correspondant à l'espace entre les deux yeux d'un observateur humain, par exemple D4 est égal à 6 cm. Les origines O' et O" des repères associés aux deux caméras sont déplacées selon le même mouvement de translation que les caméras, la caméra C1 se trouvant pointée sur l'origine d'un repère (O', X, Y, Z) et la caméra C2 sur l'origine d'un repère (O", X, Y, Z) tels que O' et O" sont distants de D4 sur l'axe Y. L'univers tridimensionnel (UNIV_3D) est ainsi créé.

La figure 7 est un organigramme détaillé correspondant à l'étape de projection E3 par le module BE de l'interface homme-machine bidimensionnelle dans l'univers tridimensionnel. L'étape de projection succède d'une part à l'étape précédemment décrite d'acquisition E2 de l'un des composants de l'interface homme-machine et d'autre part à la création de l'univers tridimensionnel virtuel de l'étape E1. Lors de la première étape E20 (GENE), on dispose donc en entrée d'un composant d'interface homme-machine bidimensionnelle (CP_2D) et de l'univers virtuel tridimensionnel (UNIV_3D). Le module BE fait appel au pilote graphique API pour réaliser les différentes sous-étapes de cette projection.

Lors de l'étape E20, une image bidimensionnelle est créée à partir du composant graphique acquis. Par exemple, si la bibliothèque TK fournit en entrée une représentation géométrique du composant bouton 2, cette étape se charge de transformer cette représentation en un ensemble de pixels assimilables à une image du bouton.

A partir de cette image, une texture du composant est extraite au cours de l'étape 21 (TEXT). Un tel procédé d'extraction de texture est bien connu de l'homme du métier et ne sera pas décrit plus avant. Dans cet exemple de réalisation, on appelle texture l'ensemble des pixels de l'image construite lors de l'étape E20 pour le composant considéré et applicable sur un polygone.

Puis, lors de l'étape E22 (QUAD), une surface est définie par un ensemble de polygones aptes à représenter le relief du composant graphique. Cette surface peut être, par exemple, de manière classique, un ensemble de quadrangles ou de triangles. Dans la suite de la description, on considère que le composant graphique est représenté par une projection sur un seul polygone mais la représentation du composant sur un véritable volume en perspective impliquerait plusieurs polygones. Le polygone est dessiné à la position Z=0 dans l'univers virtuel, c'est-à-dire qu'on attribue au composant une profondeur nulle par défaut.

Puis la texture est appliquée, lors de l'étape E23 (MAP), sur le polygone ainsi dessiné, à l'aide d'un procédé de plaquage de texture. Le plaquage (ou mappage) de texture est une technique bien connue qui permet de dessiner un objet bidimensionnel ou tridimensionnel de manière à ce que les polygones le constituant soient revêtus de la texture. Il s'agit d'associer à chaque pixel du polygone une valeur extraite de la texture à plaquer.

Enfin, lors d'une étape E24 facultative, une profondeur peut être associée au composant graphique projeté. Ainsi, dans notre exemple, et comme représenté sur la figure 8, la projection 3p de la fenêtre 3 est associée à une profondeur nulle (Z=0) alors que celle du bouton circulaire 4p est déplacée pour lui associer une profondeur positive (par exemple Z4 = +10) et celle du bouton rectangulaire 2p est déplacée pour lui associer une profondeur négative (par exemple Z2 = -15). L'affectation d'une profondeur à un élément lors de l'étape E24 peut être automatique ou non (par exemple, la fenêtre qui possède le « focus » de l'utilisateur peut être mise en avant, un bouton jugé facultatif peut être reculé, ou une boîte de saisie de texte avancée, etc.).

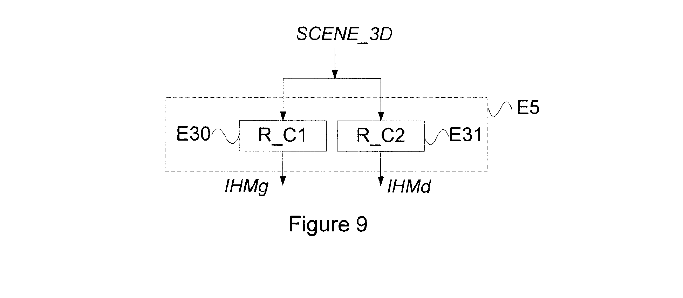

On détaille maintenant à l'aide de la figure 9, l'étape E5 de rendu des images stéréoscopiques. La scène tridimensionnelle (SCENE_3D) composée des différents éléments disposés dans le frustum des deux caméras est disponible en entrée. Au cours d'une première étape E30 (R_C1), la scène est rendue à partir de la caméra 1, c'est-à-dire qu'une première image IHMg de cette scène tridimensionnelle est capturée par la caméra 1, C1. Une seconde image IHMd est créée au cours de l'étape E31 (R_C2) identique à l'étape E30 en remplaçant la caméra 1, C1, par la caméra 2, C2. Les deux images ainsi obtenues forment un couple d'images stéréoscopiques.

Le terminal de l'invention est indifféremment un terminal connecté à un réseau, par exemple un serveur, et apte à fournir à un autre terminal, via le réseau, les images stéréoscopiques selon le procédé de l'invention, ou un terminal apte à réaliser localement le procédé de l'invention.

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre de l'invention.

Notamment, cet exemple de réalisation peut naturellement être étendu à un nombre plus élevé d'images d'interfaces graphiques dans le contexte d'un système multi-vues. Notamment, le positionnement d'un nombre de caméras supérieur à deux dans l'univers virtuel créé par l'invention permettrait de créer plus de deux images de la scène, correspondant à différentes vues des objets à afficher selon plusieurs directions. Ainsi, plusieurs images de l'interface homme-machine pourraient être transmises à un écran qui autoriserait une visualisation en relief selon plusieurs angles de vues différents.

Aussi, cet exemple de réalisation peut être étendu à des images vectorielles, c'est-à-dire des images composées d'objets géométriques individuels (segments de droite, polygones, arcs de cercle, etc.) définis chacun par divers attributs de forme, de position, de couleur, etc. Les attributs de telles images peuvent être aisément extraits de l'image en entrée et fournis au module BE afin de créer plusieurs images stéréoscopiques en sortie.

## Revendications

1. Procédé de création d'images stéréoscopiques (IHMd, IHMg) à partir d'une description (IHM) d'une image bidimensionnelle (IHM2d) comportant au moins un composant d'interface graphique (2,3,4), **caractérisé en ce que** au moins un composant (2,3,4) de l'image bidimensionnelle (IHM2d) est transformé de telle sorte que les images stéréoscopiques créées (IHMd, IHMg) sont différentes de ladite image bidimensionnelle (IHM2d) .

2. Procédé de création selon la revendication 1 caractérisé en ce la création des images stéréoscopiques (IHMd, IHMg) comporte les étapes suivantes :
- Acquisition (E2) d'au moins un composant d'interface graphique (2,3,4) bidimensionnel dans la description (IHM) de l'image bidimensionnelle (IHM2d);
- Projection (E3) dudit au moins un composant graphique (2,3,4) acquis dans un univers tridimensionnel (UNIV_3D);
- Capture (E5) des images stéréoscopiques (IHMg, IHMd) à partir de ladite projection dans l'univers tridimensionnel.

3. Procédé de création selon la revendication 2, **caractérisé en ce que** l'étape de projection (E3) comporte une affectation au composant graphique (2p, 3p, 4p) d'un paramètre de profondeur (E24, DEPTH).

4. Terminal apte à créer des images stéréoscopiques (IHMd, IHMg) à partir d'une description (IHM) d'une image bidimensionnelle (IHM2d) comportant au moins un composant d'interface graphique (2,3,4), **caractérisé en ce qu'**il comprend des moyens de transformation d'au moins un composant de l'image bidimensionnelle (IHM2d) de telle sorte que les images stéréoscopiques créées (IHMd, IHMg) sont différentes de ladite image bidimensionnelle (IHM2d).

5. Terminal selon la revendication 4 **caractérisé en ce qu'**il comprend :
- Des moyens d'acquisition (TK, BE) d'au moins un composant graphique dans une description d'une interface graphique bidimensionnelle ;
- Des moyens de projection (BE, API) dudit au moins un composant sélectionné dans l'univers tridimensionnel;
- Des moyens de capture (TK, BE, API) des deux images stéréoscopiques (IHMd, IHMg) à partir de ladite projection dans l'univers tridimensionnel.

6. Terminal selon la revendication 5 **caractérisé en ce qu'**il comprend des moyens d'affectation au composant graphique d'un paramètre de profondeur (Z4, Z2).

7. Programme d'ordinateur apte à être mis en oeuvre sur un terminal tel que défini dans la revendication 4, le programme comprenant des instructions de code qui, lorsque le programme est exécuté par un processeur, réalise les étapes du procédé défini selon l'une des revendications 1 à 3.
